# EUROPEAN PATENT APPLICATION

(11) **EP 1 022 699 A2**
(43) Date of publication of application: **26.07.2000**
(21) Application number: 00300223.5
(22) Date of filing: 13.01.2000
(51) Int. Cl.: G07F 19/00, H04L 29/06

(54) **Self-service terminal network**

(30) Priority: 21.01.1999 GB 9901301
(71) Applicant: NCR INTERNATIONAL INC., Dayton, Ohio 45479 (US)
(72) Inventor: Monaghan, Andrew, Dundee DD2 1DS, Scotland (GB)
(74) Representative: Williamson, Brian

(57) **Abstract**

A plurality of self-service terminals (16a,b,c,d) are connected in a network (18) which is connected by a communication link (20) to a proxy unit (14). The network (18) implements an obsolescent (legacy) protocol. A manager unit (12) is provided to monitor the health of the terminals and the manager unit (12) operates under the SNMP standard, which requires that the manager unit (12) communicates through a network operating under a later protocol. To enable two-way communication to take place between the manager unit (12) and the terminal network (18), a proxy unit (14) is provided which is connected both to the terminal network (18) and the TCP/IP network (22). Proxy unit (14) has a table of addresses, one for each of the terminals (16a,b,c,d) of the terminal network (18) and receives messages from the manager unit (12) sent in IP protocol which are intended for a terminal (16). These messages are translated into a form suitable for transmission over the terminal network (18). Likewise messages from a terminal in legacy format are passed over the terminal network (18) and are received in the proxy unit (14) where they are converted for onward transmission over the IP network (22) to the manager unit (12). Thus the proxy unit (14) is transparent to both the terminal network (18) and the manager unit (12).

## Description

This invention relates to self-service terminal (SST) networks. In particular, the invention relates to banking self-service terminal networks which are provided with facilities to monitor the state of the terminals comprising the network.

It is highly undesirable for a banking SST, such as an automated teller machine (ATM), to fail to offer cash or receipt services because of an operational failure in either its hardware or software. This is so even when installed in locations remote from bank premises where access for maintenance may be difficult. It is therefore important to be able to monitor the health of these networks in general and the individual terminals of the networks in particular. To this end network health management systems have been devised. The most up-to-date and best of these systems operate under current communications protocols. However many banking SST networks were installed some years ago and continue to operate under obsolescent communications protocols. However, to modernise the obsolescent communications protocols would be expensive and cause large scale upheaval of the existing network infrastructures.

It is therefore an object of the invention to enable a health management system operating under a later communications protocol to be used in a banking network operating under an earlier protocol.

According to the invention a self-service terminal network comprises a plurality of terminals, a proxy unit, and a manager unit, characterised in that: the terminals are connected to the proxy unit by first communication means implementing a first communications protocol; the proxy unit is connected to the manager unit by second communication means implementing a second communications protocol; and the proxy unit includes translation means enabling the manager unit and the terminals to communicate with each other on a two-way basis.

By virtue of the invention, the manager unit is able to monitor the state of the terminals using the second communications protocol as if it was accessing each terminal directly, even though the terminals communicate using a different protocol and can only be accessed via the proxy unit. This allows the SNMP standard to be used as the second protocol.

In carrying out the invention the translation means may include means for receiving messages from the manager unit which are intended for a terminal, which messages are sent in accordance with the second protocol, and converting the messages into the first protocol for onward transmission to the terminals, and for receiving messages from terminals which are intended for the manager unit, which messages are in accordance with the first protocol and converting such messages into the second protocol for onward transmission to the manager unit.

Preferably the proxy unit is transparent to both the manager unit and the terminals.

In an embodiment of the invention the proxy unit holds a multiplicity of addresses, there being an individual address for each of the terminals which addresses are in a form compatible with the second protocol. The proxy unit may include an operating system providing a plurality of logical addresses, one logical address for each terminal.

Both the proxy unit and the manager unit are preferably connected in a network operating in accordance with the second protocol.

Preferably, the second communication means is a TCP/IP network.

An embodiment of the invention will now be described, by way of example, with reference to the accompanying drawings in which:
Fig. 1 illustrates in diagrammatic form a network architecture embodying the invention;
Fig. 2 illustrates the operation of part of Fig 1; and
Fig. 3 illustrates the operation of the network architecture of Fig. 1.

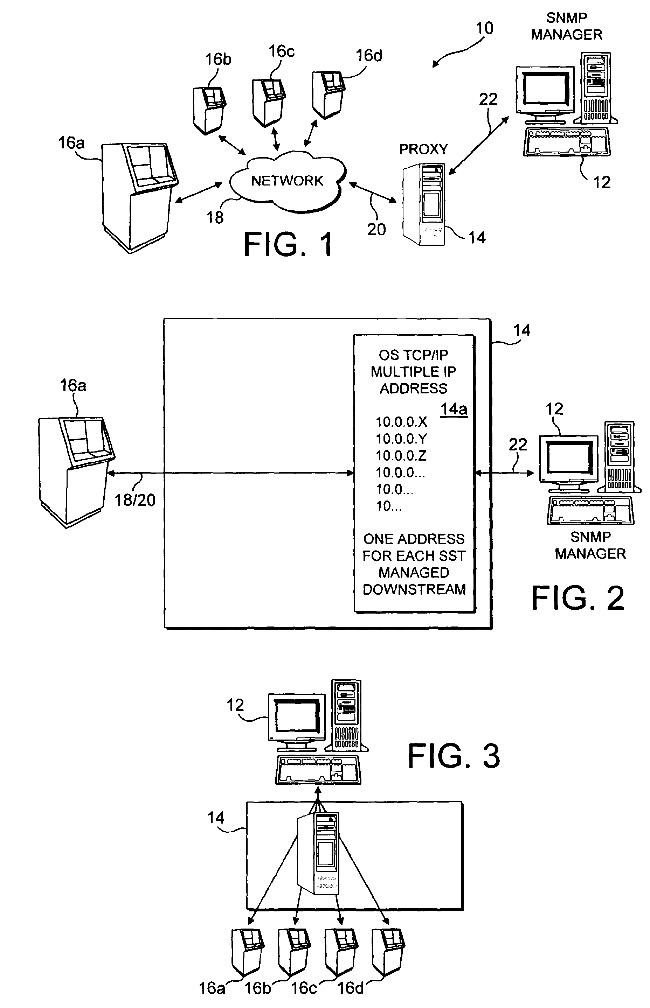

Referring to Fig. 1, there is illustrated a banking network 10 comprising a manager unit 12, a proxy unit 14, and four ATMs 16 labelled 16a,b,c,d which are mutually interconnected by a legacy network 18.

Manager unit 12 is programmed to implement the SNMP (simple network management protocol) network monitoring and control protocol for managing banking networks such as network 10. The SNMP standard requires the manager 12 to be able to interrogate each ATM 16 directly. However, because legacy network 18 conveys messages (such as status information) using proprietary protocols a proxy unit must be used between the legacy network 18 and the manager 12. This means that the manager 12 is not able to interrogate directly each ATM 16 in network 18.

The cost of replacing the legacy infrastructure to allow the manager 12 to access directly each ATM 16 and to allow the ATMs 16 to convey messages using the SNMP format is very high. The arrangement described and illustrated herein is therefore provided to avoid the need for such replacement.

The proxy unit 14 is connected to the legacy network 18 by a communication link 20 (which may be in the form of one or more physical cables). First communication means are provided by the combination of the legacy network 18 and the communication link 20. The proxy unit 14 is also connected to the manager unit 12 by a TCP/IP (transmission control protocol/internet protocol) network 22 which supports direct interrogation of terminals connected to the network by means of a unique IP address for each terminal. The second communication means is provided by the TCP/IP network 22.

Thus, it will be appreciated that messages may be conveyed between the ATMs 16 and the proxy unit 14 using a first communications protocol (which may be a proprietary format), and messages may be conveyed between the proxy unit 14 and the manager unit 12 using a second (different) communications protocol (which may be TCP/IP) which supports direct interrogation of terminals.

Proxy unit 14 is termed "multi-homed" because it maintains a plurality of connections to the TCP/IP network 22. There is a connection for each ATM 16 which is connected to legacy network 18. However, each connection is not necessarily a physical connection; there may be a large number of logical connections (different IP addresses) which require only a small number of physical connections (network cards). Thus, rather than having one network card per IP address, there may only be a single network card installed in the proxy unit 14 for connecting to the TCP/IP network 22. In practice the proxy unit 14 may rely on its operating system to provide the required multiplicity of IP addresses. For example, Windows NT® can be configured with more than 1000 IP addresses, each one of these IP addresses being capable of supporting an ATM 16. The proxy unit 14 maintains a lookup table 14a correlating each IP address with its associated ATM 16.

The operation of the arrangement of Fig. 1 is described with reference to Fig. 2 in which like parts have like reference numerals to Fig. 1. However Fig. 2 shows proxy unit 14 in more detail. Consider what occurs when SNMP manager unit 12 generates a message intended for ATM 16. This message includes the address of ATM 16 in IP format and is transmitted from manager unit 12 over network 22. Proxy unit 14 maintains multiple IP addresses, there being a unique address for each ATM 16 in network 18, including the address of ATM 16a. The message intended for ATM 16a is therefore received in proxy unit 14, although from the point of view of manager 12 it is considered as having been received by ATM 16a because it was addressed to the IP address of ATM 16a.

Proxy unit 14 includes means for translating the received message and its address into the proprietary format used by the communication link 20 and legacy network 18. The translated message is then transmitted via the communication link 20 and legacy network 18 to the addressed ATM 16a.

Each ATM 16 includes SNMP-type agent software (not shown) which receives SNMP commands in the legacy network protocol format, and responds to these commands in the legacy network protocol format.

From the point of view of ATM 16a receiving the message it appears to come directly from manager 12 but in a format readable by the ATM 16a. Thus proxy unit 14 is invisible or appears transparent both to manager 12 and to ATM 16a, as illustrated in Fig. 3.

An ATM, for example ATM 16a, may send a message to manager 12. Such a message may be in response to a message it has received or the message may be generated on the initiative of ATM 16a. In either case the message is in the format of the legacy protocol of network 18. The message travels via network 18 and communication link 20 to proxy unit 14. Proxy unit 14 translates the message from legacy protocol format into IP protocol format, and applies the unique IP address associated with the sender unit to the message. The unique IP address associated with each ATM 16 is held by the proxy unit 14 because the ATMs 16 in the legacy network 18 do not have physical IP addresses as they do not implement the TCP/IP protocol. The translated message (which is now in TCP/IP format) is transmitted to manager 12 via the TCP/IP network 22.

An advantage of the arrangement described above is that since proxy unit 14 is transparent to manager 12 no change or extension to the SNMP standard is required to provide full two-way communication between the manager 12 and the ATMs 16. This means that the proxy unit 14 is interoperable with all SNMP manager units and allows the full SNMP standard to be applied to non-TCP/IP devices without extending the protocol using proprietary extensions. This ensures that the manager 12 can efficiently monitor the state of health of the ATMs 16 and thereby minimise the possibility of operational malfunction and the resulting failure to offer cash or receipt services.

Various modifications may be made to the above described embodiments. For example, in other embodiments non-cash SSTs may be used rather than ATMs. SSTs may dispense stamps, vouchers, ski-passes and such like. The SST units may provide other services than those described above, for example, they may be information kiosks. In practice, there may be many more ATMs 16 included in legacy network 18 than are shown in Fig. 1.

## Claims

1. A self-service terminal network (10) comprising a plurality of terminals (16), a proxy unit (14), and a manager unit (12), characterised in that: the terminals (16) are connected to the proxy unit (14) by first communication means (18,20) implementing a first communications protocol; the proxy unit (14) is connected to the manager unit (12) by second communication means (22) implementing a second communications protocol; and the proxy unit (14) includes translation means enabling the manager unit (12) and the terminals (16) to communicate with each other on a two-way basis.

2. The network as claimed in claim 1, wherein the translation means includes means for receiving messages from the manager unit (12) which are intended for a terminal (16), which messages are sent in accordance with the second protocol, and converting the messages into the first protocol for onward transmission to the terminals (16), and for receiving messages from terminals (16) which are intended for the manager unit (12), which messages are in accordance with the first protocol and converting such messages into the second protocol for onward transmission to the manager unit (12).

3. The network as claimed in either one of the preceding claims in which the proxy unit (14) is transparent to both the manager unit (12) and the terminals (16).

4. The network as claimed in any one of the preceding claims in which the proxy unit (14) holds a multiplicity of addresses, there being a unique address for each of the terminals (16) which addresses are in a form compatible with the second protocol.

5. The network as claimed in any one of the preceding claims in which both the proxy unit (14) and the manager unit (12) are connected in a network (22) operating in accordance with the second protocol.

6. The network as claimed in any one of the preceding claims, wherein the proxy unit (14) includes an operating system providing a plurality of logical addresses, one address for each terminal (16).

7. The network as claimed in any one of the preceding claims, wherein the second protocol is TCP/IP.
